# EUROPÄISCHE PATENTSCHRIFT

(11) **EP 0 610 659 B1**
(45) Veröffentlichungstag und Bekanntmachung des Hinweises auf die Patenterteilung: **17.09.1997**
(21) Anmeldenummer: 94100222.2
(22) Anmeldetag: 08.01.1994
(51) Int. Cl.: A01J 25/16

(54) **Einrichtung zur Überwachung des Reifeprozesses von Käse sowie Reifelager mit einer solchen Einrichtung**
Monitoring device for the ripening process of cheese and ripening stores with same device
Dispositif de surveillance du processus de maturation de fromages, et étagères de maturation équipés de ce dispositif

(30) Priorität: 11.02.1993 DE 4304051; 17.02.1993 DE 4304791; 03.11.1993 DE 4337450
(43) Veröffentlichungstag der Anmeldung: 17.08.1994
(73) Patentinhaber: GOLDSTEIG-KÄSEREIEN BAYERWALD GmbH, D-94447 Plattling (DE)
(72) Erfinder: Günthner, Willibald, Prof. Dr.-Ing., D-93051 Regensburg (DE)
(74) Vertreter: Graf, Helmut, Dipl.-Ing.

(56) Entgegenhaltungen:
- DATABASE WPI Section Ch, Week 7642, 30. März 1976 Derwent Publications Ltd., London, GB; Class D03, AN 76-78966 & SU-A-499 530 (BUTTER CHEESE IND)

## Beschreibung

Die Erfindung bezieht sich auf eine Einrichtung zur Überwachung des Reifeprozesses von Käse gemäß Oberbegriff Patentanspruch 1 sowie auf ein Reifelager gemäß Oberbegriff Patentanspruch 11.

Ein wesentlicher Bestandteil der Käsefertigung und insbesondere der Fertigung von Hartkäse bildet der Reifeprozeß. Um die gewünschte Qualität zu erreichen, ist es unerläßlich, diesen Reifeprozeß insbesondere auch in Hinblick auf das Erreichen des erforderlichen oder gewünschten Reifegrades zu überwachen, damit der Käse dann bei Erreichen dieses Reifegrades aus einem Reifelager ausgelagert werden kann. Die Überwachung des Reifeprozesses, wie sie in der Praxis bisher durchgeführt wird, ist aufwendig und arbeitsintensiv.

Bekannt ist die Überwachung von Löchern oder anderen Änderungen im Gefüge von Käse durch tomographische Aufnahmen mit Hilfe eines Röntgen-Gerätes. Diese Art der Überwachung ist sehr aufwendig und auch wegen einer möglichen Strahlenbelastung nicht in einem Reifelager mit einer Vielzahl von Lagerplätzen praktikabel.

Ziel der Erfindung ist es, eine Einrichtung bzw. ein Reifelager aufzuzeigen, mit der bzw. mit dem mit geringem technischen Aufwand zuverlässig eine Überprüfung des Reifeprozesses an einer Vielzahl von Lagerplätzen möglich ist.

Zur Lösung dieser Aufgabe sind eine Einrichtung bzw. ein Reifelager entsprechend dem kennzeichnenden Teil des Patentanspruches 1 oder 11 ausgebildet.

Weiterbildungen der Erfindung sind Gegenstand der Unteransprüche.

Die Erfindung wird im folgenden anhand der Figuren an Ausführungsbeispielen näher erläutert. Es zeigen:
- Fig. 1: in vereinfachter schematischer Teildarstellung und in Seitenansicht ein Regallager gemäß der Erfindung;

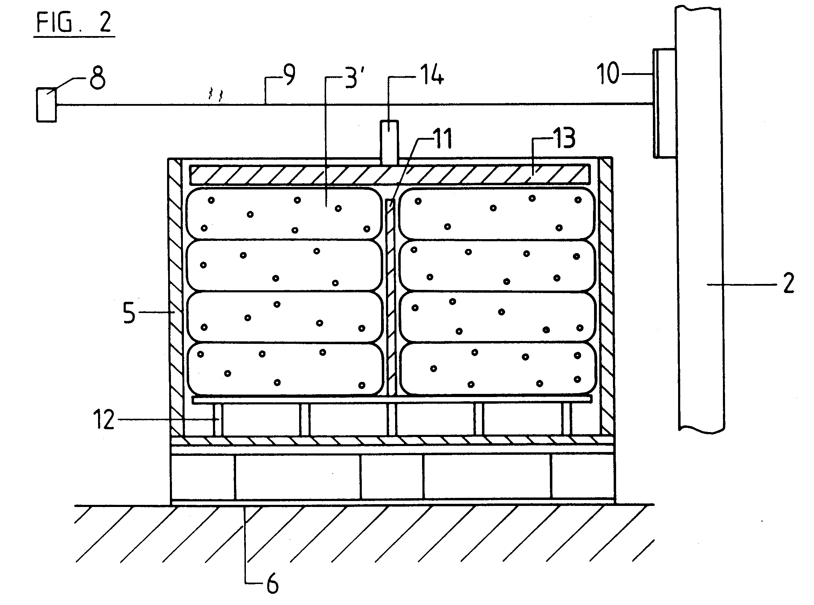

- Fig. 2: in vereinfachter Darstellung und im Vertikalschnitt einen Container zur Verwendung bei dem erfindungsgemäßen Regallager;
- Fig. 3: in einer Darstellung entsprechend Figur 1 eine weitere Ausführungsform der Erfindung;
- Fig. 4: in einer Darstellung wie Figur 2 eine weitere, mögliche Ausführungsform;
- Figuren 5 - 8: in Darstellungen ähnlich Fig. 1 weitere Ausführungsformen der Erfindung.

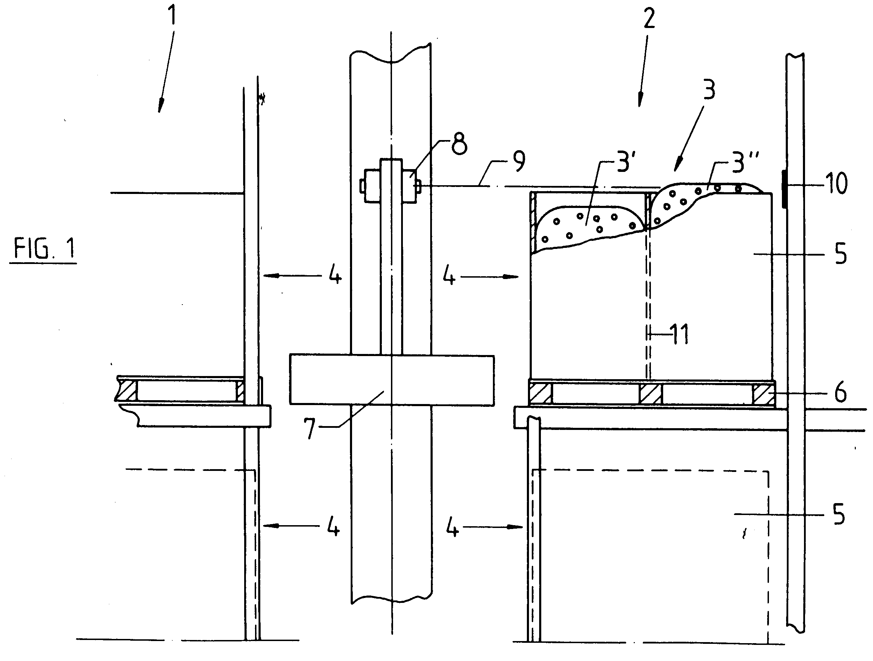

In der Figur 1 sind mit 1 und 2 zwei Regale eines Hochregallager bezeichnet, die (Regale) parallel zueinander und voneinander beabstandet mit einer Vielzahl weiterer Regale in einem Gebäuderaum untergebracht ist, dessen Temperatur und Feuchtigkeit auf einen für den Reifeprozeß des eingelagerten Käses 3 vorgegebenen Wert eingestellt sind.

Die Regale 1 und 2 und ebenso die weiteren, nicht dargestellten Regale bilden in mehreren Ebenen Lagerplätze 4, wobei in jeder Ebene eine Vielzahl solcher Lagerplätze 4 in horizontaler Richtung, d. h. in Richtung senkrecht zur Zeichenebene der Figur 1 aufeinander folgend vorgesehen sind. Der Figur 1 sind der einfacher Darstellung wegen nur zwei derartige Lagerplatzebenen- bzw. etagen wiedergegeben.

Die Lagerplätze 4 können jeweils mit einem an seiner Oberseite offenen Container 5 besetzt werden, der auf einer Palette 6 angeordnet ist und der zur Aufnahme des auszureifenden Käses 3 dient.

Mit 7 ist allgemein das übliche Regalbediengerät bezeichnet, welchen zwischen den beiden Regalen 1 und 2 vorgesehen ist und unter anderen zum Eindringen bzw. Entnehmen der Paletten 6 mit den Containern 5 in bzw. aus den Regalen 1 und 2 bzw. in oder aus den dortigen Lagerplätzen 4 dient. An den Palettenbediengerät, welches in horizontaler und vertikaler Richtung verfahrbar ist, sind zwei Lichtschranken 8 vorgesehen, von denen jede eine einen Lichtstrahl 9 aussendende Lichtquelle sowie einen Lichtdetektor zum Erfassen des reflektierten Lichtstrahles 9 besitzt. Die Lichtschranken 8 sind so orientiert, daß der ausgesandte und eventuell reflektierte Lichtstrahl 9 in horizontaler Richtung und senkrecht zur horizontalen Längserstreckung der Regale 1 und 2 gerichtet ist. An der Rückseite jedes Lagerplatzes 4 ist ein Reflektor 10 fest vorgesehen, der sich auf eine Niveau oberhalb des oberen Randes eines Containers 5 befindet, der auf der Palette 6 am betreffenden Lagerplatz 4 abgestellt ist.

Werden mit dem Regalbediengerät 7 zwei einander gegenüberliegende Lagerplätze 4 der Regale 1 und 2 angefahren, so befinden sich die beiden Lichtschranken 8 jeweils auf den gleichen Niveau mit den zugehörigen Reflektoren 10 der beiden Lagerplätze 4.

Zum Reifen des Käses 3 werden die Container 5 jeweils mit den flachen, runden Käserohlingen 3' gefüllt und zwar derart, daß diese Käserohlinge 3' im Container 5 mehrere vertikale Stapel bilden, beispielsweise vier Stapel mit mehreren Käserohlingen 3' derart, daß der oberste Käserohling 3' im Inneren des Containers 5 mit Abstand unterhalb des oberen Randes dieses Containers liegt.

Der vorzugsweise nur mit den aus einer gemeinsamen Herstellungscharge stammenden Käserohlingen 3' gefüllte und auf einer Palette 6 angeordnete Container wird für den Reifeprozeß an einem Lagerplatz 4 des Reifelagers abgestellt.

Innerhalb jedes Containers 5 sind die Stapel der Käserohlinge 3' durch herausnehmbare Trennwände oder- Bretter 11 voneinander getrennt, und zwar derart, daß bei der quaderförmigen Ausgestaltung der Container 5 jeder Stapel aus Käserohlingen 3 in einem rechteckförmigen, vorzugsweise quadratischen vertikalen Schacht angeordnet ist.

Während des Reifevorgangs folgt eine Volumenvergrößerung des Käses bzw. der Käserohlinge 3', die (Volumenvergrößerung) schließlich ein Anwachsen der Höhe jedes Stapels aus Käserohlingen 3' zur Folge hat, womit der oberste Käserohling 3' schließlich über den oberen Rand des Containers 5 vorsteht.

Mit Hilfe der an den Regalbedienungsgeräten vorgesehenen Lichtschranken 8 kann durch Höhenkontrolle diese Volumenwachstum und damit der Reifeprozeß überwacht werden. Die einzelnen Lagerplätze 4 werden hierbei beispielsweise nach einem vorgegebenen Programm mit dem Regalbediengerät 7 angefahren, wobei der Reifeprozeß dann abgeschlossen ist, wenn der ausgereifte Käse 3'' soweit über den oberen Rand des Container vorsteht, daß der Lichtstrahl 9 unterbrochen wird, d. h. dieser Lichtstrahl nicht auf den Reflektor 10 gelangen und/oder nicht von diesem reflektiert werden kann. Durch die beiden Lichtschranken 8 an dem Regalbediengerät 7 werden in jeder Stellung dieses Gerätes jeweils ein Lagerplatz 4 im Regal 1 und ein Lagerplatz 4 im Ragel 2 überprüft.

Durch die quaderförmige Ausbildung der Container 5 wird zusammen mit den Trennwänden 11 erreicht, daß beim Reifeprozess ein Höhenwachstum in der erforderlichen Weise eintritt und daß die ausgereiften Käse 3'' ebenfalls eine Quader-Form aufweisen, was für eine Stückelung bzw. für den Verkauf in kleineren Stücken besonderes vorteilhaft ist.

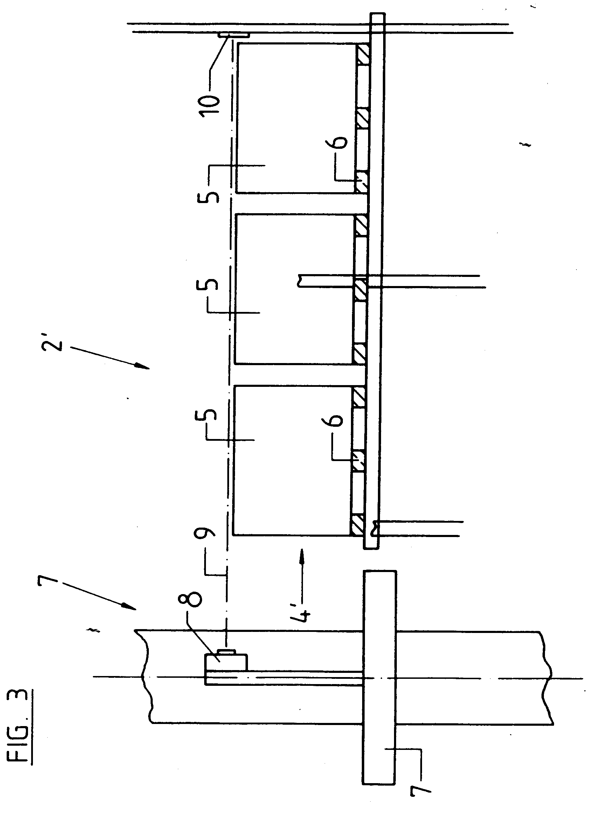

Da der Reifegrad von den jeweils erreichten Volumenwachstum abhängig ist, lassen sich ein bestimmter Reifegrad für eine bestimmte Käseart oder auch unterschiedliche Reifegrade dadurch erreichen, daß in den jeweiligen Container 5 ein Einlegerahmen 12 eingebracht wird, der dann einen etwas höheren inneren Boden für den Container 5 bildet und auf den die Käserohlinge 3' gestapelt werden. Dieser Einlegerahmen 12 ist in der Figur 3 dargestellt. Die Figur 3 zeigt auch eine Platte 13, die in den Container 5 eingelegt ist und diesen Container an der Oberseite abschließt. Die Platte 13 liegt auf den gestapelten Käserohlingen 3' auf und bildet eine Gewichtplatte, die unter anderen auch dafür sorgt, daß mit dem Volumenzuwachs während des Reifeprozesses das angestrebte Wachstum der Käserohlinge 3 in der Breite, d. h. in horizontaler Richtung erreicht wird. Auf der Oberseite der Platte 13 ist eine über diese Oberseite vorstehende Fahne oder Leiste 14 befestigt, die während des Reifeprozesses mit ihrer oberen Kante auf einen Niveau unterhalb des Lichtstrahles 9 liegt und bei abgeschlossenen Reifeprozeß dem Lichtstrahl 9 unterbricht.

Es versteht sich, daß jeweils für zwei Regale 1 und 2 wenigstens ein Regalbediengerät 7 vorgesehen ist.

Figur 3 zeigt in einer Teildarstellung ähnlich Figur 1 ein Regal 2'' zusammen mit dem zugehörigen Regalbediengerät 7. Die Lagerplätze 4' des Regales 2' sind so ausgebildet, daß an jedem Lagerplatz drei jeweils auf einer Palette 6 angeordnete Container 5 Platz finden, also jeder Lagerplatz 4' eine Lager- oder Kanaltiefe von drei Container 5 aufweist. Es versteht sich, daß beim Regal 2' wiederum in mehreren Etagen übereinander eine Vielzahl derartiger Lagerplätze 4' gebildet sind, die in jeder Etage in Richtung senkrecht zur Zeichenebene der Figur 3 aneinander anschließen. An jedem Lagerplatz 4' ist wiederum ein Reflektor 10 vorgesehen, weiterhin ist am Regalbediengerät 7 eine mit diesem Reflektoren 10 zusammenwirkende Lichtschranke 8 vorgesehen. Ist das Regalbediengerät 7 im Regal 2' und einem weiteren Regal zugeordnet, so sind an diesem Gerät beispielsweise wiederum zwei Lichtschranken 8 vorhanden. Sämtliche an einem Lagerplatz 4' angeordnete Container 5 sind jeweils mit Käserohlingen 3' gefüllt, die aus einer gemeinsamen Herstellungscharge stammen. Der Reifeprozeß der Käserohlinge 3' in sämtlichen an einem Lagerplatz 4' abgegestellten Containern wird gemeinsam, d. h. mit Hilfe eines einzigen Lichtstrahles 9 überwacht, der über alle Container 5 an dem betreffenden, überprüften Lagerplatz 4' auf den Reflektor 10 und von diesen zurück die Lichtschranke 8 verläuft. Ist der gewünschte Reifegrad erreicht, so ist der Lichtstrahl 9 unterbrochen. Da die Käserohlinge 3' an jedem Lagerplatz 4' aus einer Charge stammen, kann davon augegangen werden, daß sämtliche Käserohlinge 3' den gewünschten Reifegrad aufweisen.

Vorstehend wurde davon ausgegangen, daß die Höhenkontrolle jeweils auf einen Niveau erfolgt, welches durch die Höhe vorgegeben ist, die die jeweilige Lichtschranke 8 beim Überprüfen eines Lagerplatzes 4 bzw. 4' bzw. nach den Anfahrend dieses Lagerplatzes mit den Regalbedienungerät 7 aufweist, wobei dann unter anderen zur Berücksichtigung unterschiedlicher Käsearten und/oder zur Erzielung unterschiedlicher Reifegrade die Einlegerahmen 12 unterschiedlicher Höhe und/oder eine unterschiedliche Anzahl von Einlegerahmen 12 Verwendung findet.

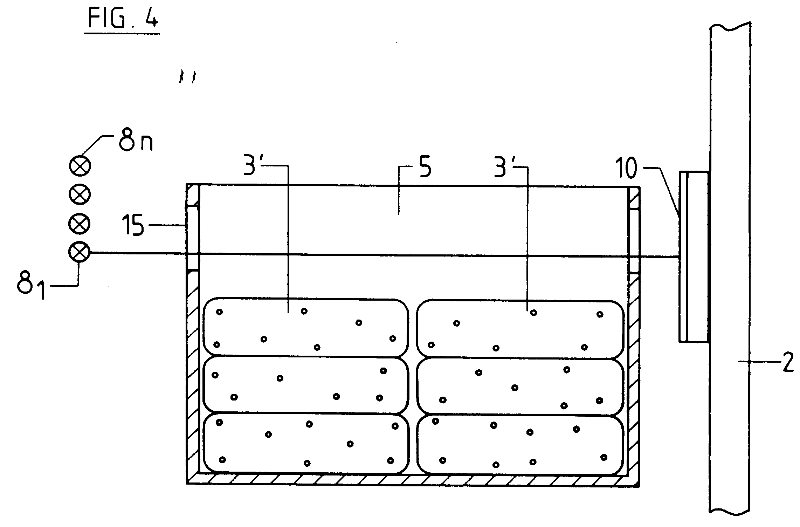

Figur 4 zeigt schematisch eine Ausführungsform, bei der beispielsweise am Regalbediengerät 7 in vertikaler Richtung übereinander mehrere Lichtschranken 8 ₁-8ₙ vorgesehen sind. An der Rückseite jedes Lagerplatzes 4 ist wiederum ein Reflektor 10 vorgesehen. An der Vorder- und Rückseite jedes Containers 5 ist in der dortigen Wandung diese Containers jeweils ein vertikaler Schlitz 15 vorgesehen. Diese Schlitze 15 sind so angeordnet, daß bei an einem Lagerplatz 4 abgestellten Container 5 der von einer Lichtschranke 8₁ - 8ₙ ausgesandte Lichtestrahl 9 durch die Schlitze 15 hindurch an den Reflektor 10 gelangt und von diesem an die betreffende Lichtschranke reflektiert wird, und zwar solange, solange ein bestimmter, diesen Lichtstrahl 9 unterbrechender Reifegrad des im Container 5 vorhandenen Käses 3 noch nicht erreicht ist. Durch die vertikale Richtung übereinander angeordneten Lichtschranken 8₁ - 8ₙ können ein unterschiedliches Volumen - bzw. Höhenwachstum und damit unterschiedliche Reifegrade überwacht werden.

Die Lichtschranken 8₁ - 8ₙ können zumindest teilweise auch so angeordnet werden, daß mit ihnen der Raum über dem Container 5 überwacht wird.

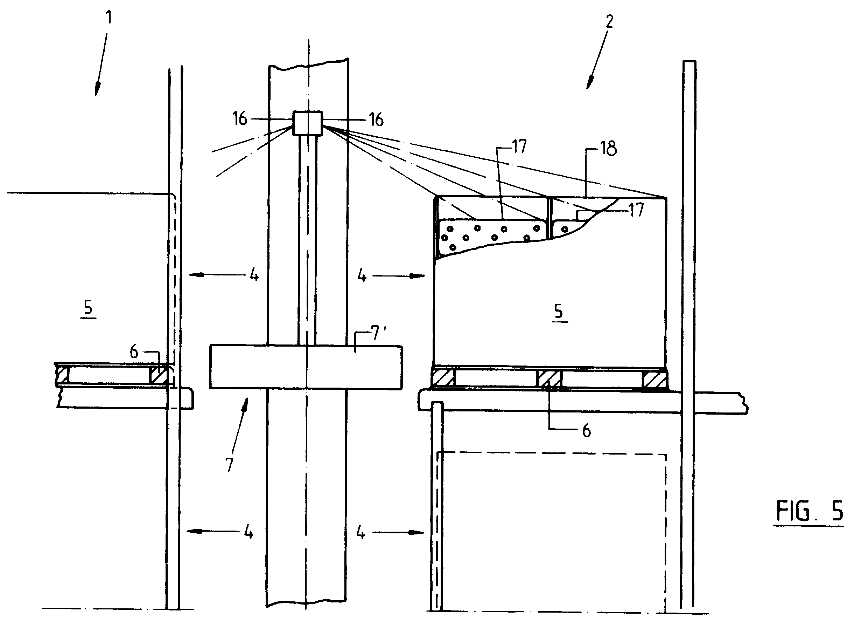

Fig. 5 zeigt als weitere Ausführungsform ein erfindungsgemäßes Regal- oder Reifelager, welches sich von dem Reifelager der Fig. 1 im wesentlichen nur dadurch unterscheidet, daß an dem Regalbediengerät 7 oberhalb der dort gebildeten Standfläche 7' für die Paletten 6 als Überwachungs- bzw. Prüfvorrichtung zwei Video-Kameras 16 vorgesehen sind, von denen jede jeweils einen im Regal 1 bzw. 2 oder an den dortigen Lagerplätzen 4 angeordneten offenen Container 5 an seiner Oberseite bzw. die Oberseite 17 des in diesen untergebrachten Käses 3 erfaßt. Die Videokameras 16 sind so ausgeführt, daß sie nur einen Bildausschnitt von der tatsächlich interessierenden Oberseite 17 und einer festen Bezugsebene oder -fläche, beispielsweise einem Teil des oberen Randes 18 des Containers 5 liefern. Bei diesem Bildvergleich wird vorzugsweise auch die Lage einer das Höhenwachstum anzeigenden, markanten Fläche und/oder Kante, beispielsweise die Fahne 14 berücksichtigt.

Die von den Videokameras 16 gelieferten Bilder werden vorzugsweise nach einer Aufbereitung und/oder Digitalisierung in einem Bildspeicher einer Auswertelektronik 19 unter der Adresse des jeweiligen Lagerplatzes 4 abgespeichert und dann mit vorgegebenen, in einem Soll-Bildspeicher gespeicherten Soll-Bildern verglichen. Der Reifeprozeß ist abgeschlossen, wenn die von einer Videokamera 16 gelieferten Bilder einem derartigen, vorgegebenen Soll-Bild entspricht. Der Container 5, der eine ausgereifte Charge an Käse 3 enthält, wird dann mit dem Regal-Bediengerät 7 aus dem entsprechenden Regal 1 bzw. 2 entnommen.

Um unterschiedliche Reifegrade zu ermöglichen, können in dem Soll-Bildspeicher unterschiedlichen Reifegraden entsprechende unterschiedliche Soll-Bilder gespeichert sein. Anstelle von zwei Videokameras 16 kann auch einzige, zwischen wenigstens zwei Positionen schwenkbare Videokamera 16 vorgesehen sein.

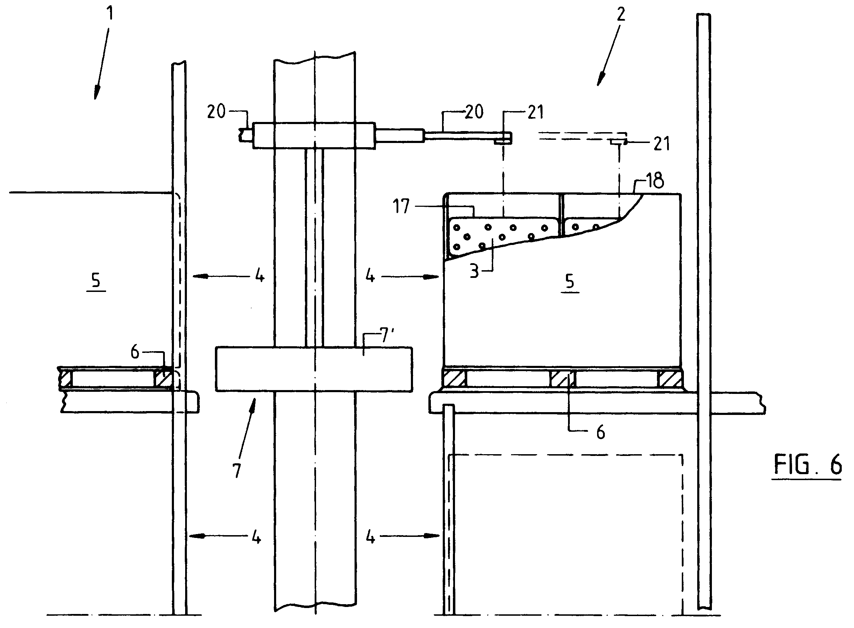

Fig. 6 zeigt eine Ausführungsform, die sich von der Ausführung der Fig. 5 dadurch unterscheidet, daß am Regal-Bediengerät 7 oberhalb der Standfläche 7' zwei wegstehende Arme 20 vorgesehen sind, die mit ihrer Längserstreckung in horizontaler Richtung senkrecht zu der Längsrichtung der Regale 1 und 2 angeordnet sind und an ihrem freien Ende jeweils eine Meßeinrichtung 21 tragen.

Die Arme 20 sind teleskopartig ausgeführt. Am Regal-Bediengerät 7 ist ein Antrieb vorgesehen, mit dem die beiden Arme 20 jeweils zwischen einer Ausgangsstellung, in der die Meßeinrichtung 21 außerhalb des jeweiligen Regals 1 bzw. 2 im Raum zwischen diesen Regalen über der Standfläche 7' angeordnet ist, in Arbeitsstellungen bewegbar ist, in denen sich die Meßeinrichtung 21 über dem an einem Lagerplatz 4 angeordneten Container 5 und über einem Käsestapel befindet. Bei der dargestellten Ausführungsform sind in jedem Container 5 senkrecht zur Regallängsrichtung zwei Käsestapel vorgesehen. Dementsprechend besitzt jeder Arm 20 zwei Arbeitsstellungen.

Mit dem jeweiligen Meßgerät 21 wird der Abstand zwischen diesem Gerät und der Oberseite 17 gemessen. Als Meßeinrichtung 21 eignet sich beispielsweise eine Laser- oder Ultraschall-Meßeinrichtung, die zur Abstandsmessung benutzt werden kann. Die Meßeinrichtung 21 kann auch eine opto-elektrische Meßeinrichtung anderer Art sein.

Die von den Meßeinrichtungen 21 gelieferten Signale werden wieder der Auswerteinrichtung 19 zugeführt. In dieser erfolgt die Überwachung des Reifeprozesses beispielsweise durch Vergleich der jeweiligen, von der Meßeinrichtung 21 gelieferten Meßsignale (Istwerte) mit einem vorgegebenen Sollwert, der bei verschiedenen, wahlweise gewünschten unterschiedlichen Reifegraden eine unterschiedliche Wertzahl aufweist.

Grundsätzlich ist es aber auch möglich, daß mit der jeweiligen Meßeinrichtung 21 unmittelbar beim Einbringen einer Käsecharge in das Regal 1 bzw. 2 der Abstand bzw. die Höhe der Oberseite 17 gemessen und dann dieser Meßwert als Ausgangswert in einem Datenspeicher der Auswerteinrichtung 19 unter der Adresse des jeweiligen Lagerplatzes 4 abgespeichert wird. Anschließend werden in einem bestimmten Zyklus Höhenmessungen an den Lagerplätzen durchgeführt. Die bei diesen zyklischen Messungen ermittelten Meßwerte werden mit dem Ausgangswert verglichen. Ein das Erreichen des gewünschten Reifegrades anzeigendes und/oder eine Entnahme des betreffenden Containers 5 aus dem Regallager veranlassendes Signal wird dann erzeugt, wenn bei dem Vergleich eines zyklischen Meßwertes mit dem zugehörigen Anfangswert eine Änderung, vorzugsweise eine normierte bzw. prozentuale Änderung, in einer vorgegebenen Größe festgestellt wird.

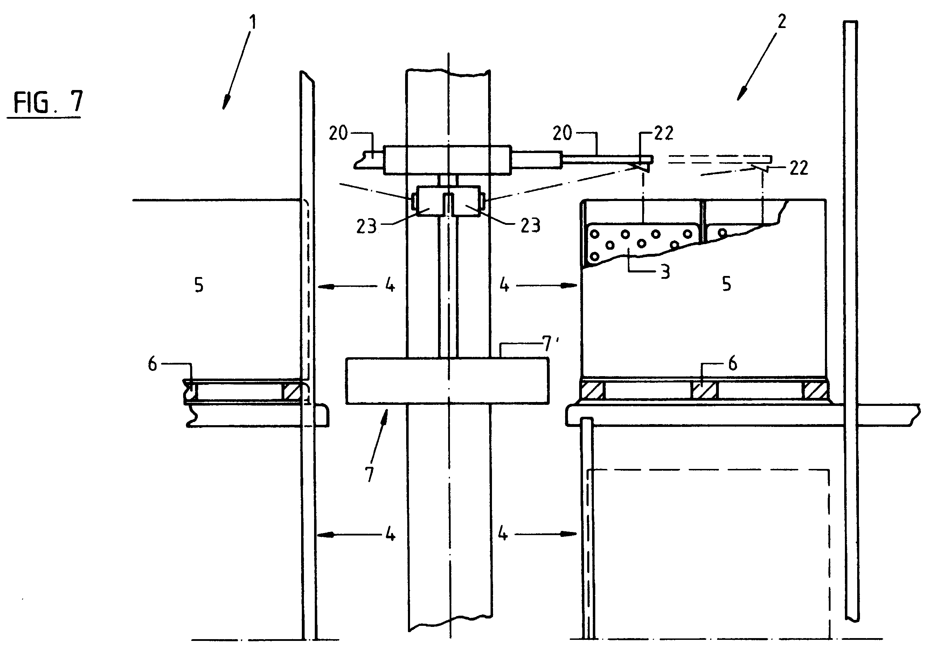

Fig. 7 zeigt eine Abwandlung der Ausführung der Fig. 6. Bei dieser Abwandlung ist an den freien Enden der Arme 20 jeweils anstelle der Meßeinrichtung 21 ein Spiegel 22 vorgesehen. Den Meßeinrichtungen 21 entsprechende Meßeinrichtungen 23 sind fest an dem Regal-Bediengerät 7 angeordnet und zwar derart, daß die jeweilige Höhenmessung über den zugehörigen Spiegel 22 erfolgt. Die Meßeinrichtungen 23 sind beispielsweise opto-elektrische Abstands-Meßeinrichtungen, beispielsweise laser-gestützte Abstands-Meßeinrichtungen.

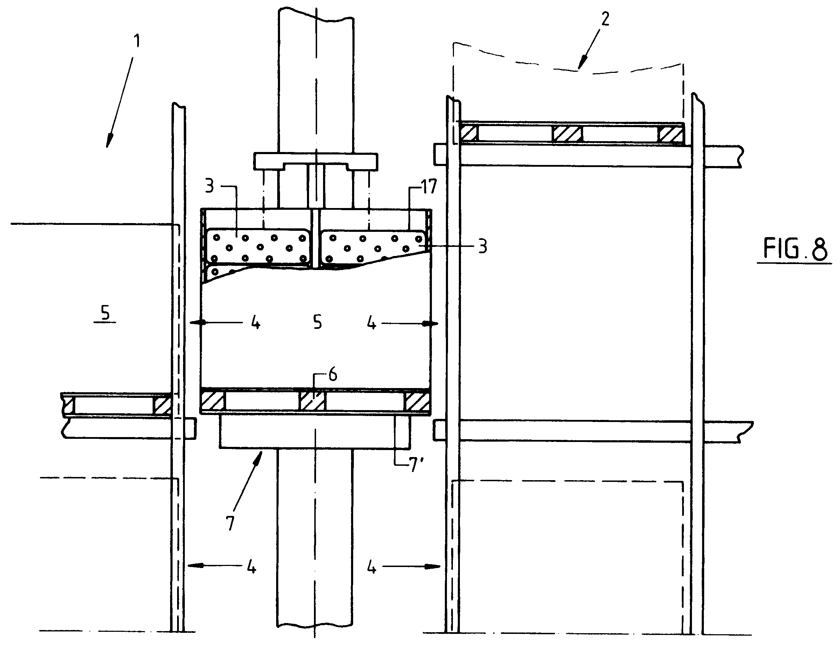

Die Fig. 8 zeigt eine Ausführungsform, bei der anstelle der Teleskop-Arme 20 und der Meßeinrichtungen 21 an solchen Armen über der Standfläche 7' des Regal-Bediengerätes 7 Meßeinrichtungen 24 zur Höhenmessung vorgesehen sind. Für die Höhenmessung bzw. für die Bestimmung des Reifegrades werden mit dem Regal-Bediengerät 7 nach einem vorgegebenen Programm die Paletten 6 den Lagerplätzen 4 entnommen und jeweil kurzzeitig auf der Standflche 7' abgestellt. Die Messung erfolgt dann bei auf der Standfläche 7' angeordneter Palette 6 durch die Meßeinrichtungen 24, von denen jede über der Oberseite 17 eines Käsestapels angeordnet ist. Die Meßeinrichtungen 24 sind wiederum opto-elektrische Meßeinrichtungen, vorzugsweise laser-gestützte Meßeinrichtungen, oder aber Ultraschall-Meßeinrichtungen, die zur Abstandsmessung geeignet sind.

Da mit den Videokameras 16, aber auch mit den Meßeinrichtungen 21, 23 und 24 Änderungen des Höhenwachstums und damit des Reifezustandes des Käses 3 erfaßt werden können, ist es nicht nur möglich, ohne mechanische Änderungen oder Einstellungen der Meßeinrichtungen unterschiedliche Reifegrade rein meßtechnisch oder softwaremäßig zu erfassen, sondern es ist u.a. auch möglich, Prognosen über den weiteren Verlauf des Reifeprozesses zu erstellen, um so beispielsweise den Überwachungszyklus zu optimieren usw.

Die Erfindung wurde voranstehend an Ausführungsbeispielen beschrieben. Es versteht sich, daß Änderungen sowie Abwandlungen möglich sind, ohne daß dadurch der der Erfindung zugrunde liegende Erfindungsgedanke verlassen wird.

So ist es beispielsweise möglich, anstelle der beschriebenen System auch andere Systeme bzw. Elemente einzusetzen, die für eine Höhenkontrolle geeignet sind.

### Bezugszeichenliste

- 1, 2, 2': Regal
- 3: Käse
- 3': Käserohling
- 3'': ausgereifter Käse
- 4, 4': Lagerplatz
- 5: Container
- 6: Palette
- 7: Regalbediengerät
- 7': Standfläche
- 8, 8₁₋8ₙ: Lichtschranke
- 9: Lichtstrahl
- 10: Lichtreflektor
- 11: Trennwand
- 12: Einlegerahmen
- 13: Platte
- 14: Fahne
- 15: Schlitz
- 16: Videokamera
- 17: Oberseite
- 18: Rand
- 19: Auswertelektronik
- 20: Arm
- 21: Meßeinrichtung
- 22: Spiegel
- 23, 24: Meßeinrichtung

## Patentansprüche

1. Einrichtung zur Überwachung des Reifeprozesses von Käse durch Überwachung des Käses mit einer Prüfvorrichtung (8, 8₁ - 8ₙ), **dadurch gekennzeichnet**, daß die Einrichtung geeignet ist zur Überwachung des Reifeprozesses an Lagerplätzen (4, 4') eines als Regallager ausgebildeten Reifelagers, welches diese Lagerplätze (4, 4') an wenigstens einem Regal (1, 2, 2') aufweist, daß die Prüfvorrichtung für eine Gruppe von Lagerplätzen (4, 4'), vorzugsweise für sämtliche an wenigstens einem Regal (1, 2, 2') gebildete Lagerplätze gemeinsam und von Lagerplatz zu Lagerplatz bewegbar ist, und daß die Überwachung des Reifeprozesses durch Kontrolle oder Überwachung der Höhe des Käses erfolgt.

2. Einrichtung nach Anspruch 1, dadurch gekennzeichnet, die Prüfvorrichtung (8, 8₁ -8ₙ) an einem Regalbediengerät (7) vorgesehen ist.

3. Einrichtung nach Anspruch 1 oder 2, dadurch gekennzeichnet, daß die Prüfvorrichtung eine opto-elektrische Prüfvorrichtung (8, 8₁ - 8ₙ) oder eine Ultraschall-Höhenmeß- oder Kontrolleinrichtung ist.

4. Einrichtung nach Anspruch 3, dadurch gekennzeichnet, daß die Prüfvorrichtung beispielsweise eine Lichtschranke (8, 8₁ - 8ₙ) und/oder eine Video-Einrichtung mit Bildvergleich und/oder eine Laser gestützte Meßeinrichtung (21, 23, 24) für eine Abstandsmessung ist.

5. Einrichtung nach einem der vorhergehenden Ansprüche, dadurch gekennzeichnet, daß bei Ausbildung der Prüfvorrichtung als opto-elektrische Einrichtung an jedem Lagerplatz (4, 4'), vorzugsweise an der Rückseite jedes Lagerplatzes wenigstens ein Reflektor (10) vorgesehen ist.

6. Einrichtung nach einem der Ansprüche 1 - 5, gekennzeichnet durch Container (5) zur Aufnahme des Käses, wobei die wenigstens eine Prüfvorrichtung (8, 8₁ - 8ₙ) die Höhe des Käses (3) im Container und/oder die Höhe des über den Container (5) vorstehenden Käses und/oder eine die Höhe des Käses (3) bestimmende Kante oder Fläche (14) überwacht.

7. Einrichtung nach einem der Ansprüche 1 - 6, gekennzeichnet durch Mittel zur Änderung des Niveaus der inneren Bodenfläche der Container (5), wobei vorzugsweise die Mittel zur Änderung des Niveaus der Innenfläche des Containerbodens von in die Container einsetzbaren und aus diesem entnehmbaren Einlegeelementen oder -rahmen gebildet sind.

8. Einrichtung nach einem der Ansprüche 1 - 7, dadurch gekennzeichnet, daß mit der wenigstens einen Prüfvorrichtung (8₁ - 8ₙ) unterschiedliche Höhenlagen erfaßt werden können,
wobei vorzugsweise die wenigstens eine Prüfvorrichtung in vertikaler Richtung bewegbar ist und/oder in vertikaler Richtung versetzt mehrere Einzelprüfvorrichtungen, vorzugsweise mehrere Lichtstrecken (8₁ - 8ₙ) aufweist.

9. Einrichtung nach einem der Ansprüche 1 - 8, dadurch gekennzeichnet, daß jeder Lagerplatz (4') eine Platz-oder Regaltiefe für mehrere Lagereinheiten aufweist, und daß mit der wenigstens einer Prüfvorrichtung die Höhe bzw. das Höhenwachstum des Käses (3) sämtlicher Lagereinheiten eines Lagerplatzes (4') gleichzeitig überwacht wird.

10. Einrichtung nach einem der Ansprüche 1 - 9, dadurch gekennzeichnet,
daß die Meßeinrichtung (21) an einem am Regal-Bediengerät (7) gehaltenen Ausleger oder Arm (20) befestigt ist, mit der die Meßeinrichtung (21) zwischen Ausgangsstellung außerhalb des Regals (1, 2, 2') oder der dortigen Lagerplätze (4, 4') und wenigstens einer Arbeitsstellung über einen Lagerplatz (4, 4') oder über der zu überwachenden Fläche (17) bewegbar ist,
und/oder
daß die Meßeinrichtung (23) an dem Regal-Bediengerät (7) vorgesehen ist, wobei an einem am Regal-Bediengerät gehaltenen Ausleger oder Arm (20) ein Spiegel (22) befestigt ist, der zwischen einer Ausgangsstellung, in welchem sich der Spiegel außerhalb des Regales (1, 2, 2') oder der dotigen Lagerplätze (4, 4') befindet, und wenigstens einer Arbeitsstellung bewegbar ist, in der der Spiegel (22) über einem Lagerplatz (4, 4') oder über der zu überwachenden Fläche (17) angeordnet ist, und wobei der Spiegel (22) für eine Reflexion eines von der Meßeinrichtung (23) ausgehenden, die Messung bewirkenden Signals von der Meßeinrichtung auf die zu überwachende Fläche (17) sowie zur Reflexion des von dieser Fläche (17) an die Meßeinrichtung (23) rückgeführten Signals dient,
und/oder
daß die Meßeinrichtung (24) fest über einer Standfläche (7') des Regal-Bedienungsgerätes (7) vorgesehen ist, wobei Mittel vorgesehen sind, um den zu überwachenden Käse (3) unterhalb der Meßeinrichtung (24) auf der Standfläche (7') für die Überprüfung oder Messung anzuordnen,
und/oder
daß die Prüfeinrichtung wenigstens eine Videokamera (16), mit der zumindest die zu überwachende Fläche (17) erfaßt wird, sowie wenigstens eine Auswerteinrichtung oder Elektronik (19) für eine Auswertung des von der Videokamera (16) gelieferten Signals, vorzugsweise durch Bildvergleich aufweist, wobei vorzugsweise die Videokamera (16) an dem Regal-Bediengerät (7) vorgesehen ist und die optische Achse der Videokamera (16) schräg von oben auf die zu überwachende Fläche (17) gerichtet ist.

11. Reifelager in Form eines Regallagers zum Reifen von Käse, mit mehreren an wenigstens einem Regal (1, 2, 2') gebildeten Lagerplätzen (4, 4') zur Lagerung des Käses (3) während des Reifeprozesses und mit wenigstens einer Einrichtung nach einem der Ansprüche 1 - 8.

## Claims

1. Device for the monitoring of the ripening process of cheese, by inspecting the cheese with a testing device (8, 8₁ - 8ₙ), distinguished by the fact that the device is suitable for the monitoring of the ripening process in storage positions (4, 4') of a ripening store taking the form of a shelved area, which has these storage positions (4, 4') on at least one shelf (1, 2, 2'), that the testing device is constructed to check on a group of storage positions (4, 4') simultaneously, preferably on all those on at least one shelf (1, 2, 2'), and can be moved from storage position to storage position, and that the monitoring of the ripening process takes place by means of checking or monitoring the height of the cheese.

2. Device as Claim 1, distinguished by the fact that the testing device (8, 8₁ - 8ₙ) is provided on a shelf control unit (7).

3. Device as Claim 1 or 2, distinguished by the fact that the testing device is an opto-electrical testing device (8, 8₁ -8ₙ) or an ultra-sonic height gauging or checking device.

4. Device as Claim 3, distinguished by the fact that the testing device is, for example, a light barrier (8, 8₁ -8ₙ), and / or a video device with image comparison and / or a laser-supported gauging device (21, 23, 24) for an interval measurement.

5. Device as one of the preceding claims, distinguished by the fact that, with the testing device taking the form of an opto-electrical device, at least one reflector (10) is provided, preferably at the back of each storage position.

6. Device as one of Claims 1 - 5, distinguished by containers (5) to receive the cheese, with at least one testing device (8, 8₁ - 8ₙ) monitoring the height of the cheese (3) in the container and / or the height of the cheese projecting above the container (5), and / or an edge or surface (14) determining the height of the cheese (3).

7. Device as one of Claims 1 - 6, distinguished by a means of altering the level of the internal base of the containers (5), with the means of altering the level of the internal surface of the container base preferably taking the form of insert elements or frames which can be inserted into the containers and removed from them.

8. Device as one of Claims 1 - 7, distinguished by the fact that different height positions can be registered with at least one testing device (8₁ - 8ₙ), with the testing device(s) preferably being mobile in the vertical direction and / or combining several individual testing devices, preferably several light paths (8₁ - 8ₙ) at different heights on the same vertical line.

9. Device as one of Claims 1 - 8, distinguished by the fact that each storage position (4') has a position depth or shelf depth which can accomodate several storage units, and that the height or the increase in height of the cheese (3) in all the storage units of a storage position (4') is simultaneously monitored.

10. Device as one of Claims 1 - 9, distinguished by the fact
that the gauging device (21) is mounted on a bracket or arm (20) held on the shelf control unit (7), with which the gauging device (21) can be moved between the initial position away from the shelf (1, 2, 2') or the storage positions there (4, 4') and at least one operating position above a storage position (4, 4') or above the surface to be monitored (17),
and / or
that the gauging device (23) is provided on the shelf control unit (7), with a mirror (22) being fixed to a bracket or arm (20) held on the shelf control unit, which can be moved between an initial position, in which the mirror is located away from the shelf (1, 2, 2') or the storage positions there (4, 4') and at least one operating position, in which the mirror (22) is mounted above a storage position (4, 4') or above the surface to be monitored (17), and with the mirror (22) serving to reflect a signal carrying out the measurement, going from the gauging device (23), to the surface to be monitored, (17) and to reflect the signal going back from this surface (17) to the gauging device (23),
and / or
that the gauging device (24) is permanently mounted above a positioning surface (7') of the shelf control unit (7), with a means being provided of positioning the cheese (3) to be monitored below the gauging device (24) on the positioning surface (7') for monitoring or gauging,
and / or
that the testing device has at least one video-camera (16), with which at least the surface (17) to be monitored is covered, together with at least one evaluation device or electronic unit (19) for an evaluation of the signal supplied by the video-camera (16), preferably by means of image comparison, with the video-camera (16) preferably being provided on the shelf control unit (7) and the optical axis of the video-camera (16) being aligned obliquely from above onto the surface (17) to be monitored.

11. Conditioning store in the form of a shelved area for the ripening of cheese, with several storage positions (4, 4') on at least one shelf (1, 2, 2') for the storage of the cheese (3) during the ripening process, and with at least one device as one of Claims 1 - 8.

## Revendications

1. Installation de surveillance du processus de maturation des fromages par la surveillance du fromage, équipée d'un dispositif de contrôle (8, 8₁-8ₙ), caractérisée en ce que l'installation est appropriée à la surveillance du processus de maturation sur les surfaces de stockage (4, 4') d'un local de maturation équipé de rayonnages, lequel local contient ces surfaces de stockage (4, 4') sur au moins une étagère (1, 2, 2'), en ce que le dispositif de contrôle peut être déplacé en commun pour un groupe de surfaces de stockage (4, 4'), de préférence pour toutes les surfaces de stockage formées sur au moins une étagère (1, 2, 2'), et peut être déplacé d'une surface de stockage à une autre, et en ce que la surveillance du processus de maturation consiste à contrôler ou surveiller la hauteur du fromage.

2. Installation selon la revendication 1, caractérisée en ce qu'il est prévu de monter le dispositif de contrôle (8, 8₁-8ₙ) sur un appareil de chargement et déchargement des étagères (7).

3. Installation selon la revendication 1 ou 2, caractérisée en ce que le dispositif de contrôle est un dispositif de contrôle opto-électrique (8, 8₁-8ₙ) ou un dispositif à ultrasons de mesure de la hauteur ou de contrôle.

4. Installation selon la revendication 3, caractérisée en ce que le dispositif de contrôle est, par exemple, une barrière photoélectrique (8, 8₁-8ₙ) et/ou une installation vidéo équipée d'un comparateur d'image et/ou un dispositif de mesure assisté par laser (21, 23, 24) destiné à mesurer la distance.

5. Installation selon l'une quelconque des revendications précédentes, caractérisée en ce que, pour un dispositif de contrôle conçu sous forme de dispositif opto-électrique, il est prévu de monter au moins un réflecteur (10) sur chaque surface de stockage (4, 4'), de préférence sur la face arrière de chaque surface de stockage.

6. Installation selon l'une quelconque des revendications 1 à 5, caractérisée par des conteneurs (5), dans lesquels sont posés les fromages, dans laquelle au moins un dispositif de contrôle (8, 8₁-8ₙ) surveille la hauteur du fromage (3) dans le conteneur et/ou la hauteur du fromage dépassant du conteneur (5) et/ou un bord ou une surface (14) déterminant la hauteur du fromage (3).

7. Installation selon l'une quelconque des revendications 1 à 6, caractérisée par des moyens destinés à modifier le niveau du fond intérieur du conteneur (5), dans laquelle de préférence les moyens destinés à modifier le niveau de la surface intérieure du fond du conteneur sont constitués par des éléments encastrés ou des cadres encastrés susceptibles d'être insérés dans les conteneurs ou extraits de ceux-ci.

8. Installation selon l'une quelconque des revendications 1 à 7, caractérisée en ce qu'il est possible d'enregistrer les différentes positions en hauteur avec au moins un dispositif de contrôle (8₁-8ₙ), dans laquelle de préférence au moins ledit dispositif de contrôle peut être déplacé dans le sens vertical et/ou est muni de plusieurs dispositifs de contrôle individuels, de préférence des barrières photoélectriques (8₁-8ₙ), décalées dans le sens vertical.

9. Installation selon l'une quelconque des revendications 1 à 8, caractérisée en ce que chaque surface de stockage (4') présente une profondeur de surface ou d'étagère pour plusieurs unités de stockage, et en ce qu'au moins un dispositif de contrôle surveille la hauteur ou l'augmentation de hauteur du fromage (3) en même temps dans toutes les unités de stockage d'une surface de stockage (4').

10. Installation selon l'une quelconque des revendications 1 à 9, caractérisée en ce que le dispositif de mesure (21) est fixé sur l'avant-bras ou le bras (20) d'un appareil de chargement et déchargement des étagères (7), lequel appareil permet de déplacer le dispositif de mesure (21) entre la position de départ en dehors de l'étagère (1, 2, 2') ou des surfaces de stockage locales (4, 4') et au moins une position de travail au-dessus d'une surface de stockage (4, 4') ou au-dessus de la surface (17) à surveiller,
et/ou
en ce qu'il est prévu de monter le dispositif de mesure (23) sur l'appareil de chargement et déchargement des étagères (7), un miroir (22) étant fixé sur l'avant-bras ou le bras (20) maintenu par l'appareil de chargement et déchargement des étagères, lequel miroir peut être déplacé entre une position de départ, dans laquelle le miroir se trouve en dehors de l'étagère (1, 2, 2') ou des surfaces de stockage locales (4, 4'), et au moins une position de travail dans laquelle le miroir est disposé au-dessus d'une surface de stockage (4, 4') ou au-dessus de la surface (17) à surveiller, le miroir (22) étant destiné à réfléchir un signal induisant la mesure, émis par le dispositif de mesure (23), à partir du dispositif de mesure sur la surface (17) à surveiller, et à réfléchir vers le dispositif de mesure (23) le signal en retour provenant de cette surface (17),
et/ou
en ce que le dispositif de mesure (24) est monté de manière stationnaire au-dessus d'une surface fixe (7') de l'appareil de chargement et déchargement des étagères (7), des moyens étant prévus pour disposer le fromage (3) à surveiller au-dessous du dispositif de mesure (24) sur la surface fixe (7') pour exécuter le processus de contrôle ou de mesure,
et/ou
en ce que le dispositif de contrôle est équipé d'au moins une caméra de surveillance (16), qui permet d'enregistrer au moins la surface (17) à surveiller, et d'au moins un dispositif d'analyse ou dispositif électronique (19) destiné à analyser le signal émis par la caméra de surveillance (16), de préférence par comparaison d'image, la caméra de surveillance (16) étant montée de préférence sur l'appareil de chargement et déchargement des étagères (7) et l'axe optique de la caméra de surveillance (16) étant orienté en oblique du haut vers la surface (17) à surveiller.

11. Local de maturation sous forme de local équipé de rayonnages pour la maturation des fromages, comprenant plusieurs surfaces de stockage (4, 4') formées sur au moins une étagère (1, 2, 2'), destiné au stockage du fromage (3) pendant le processus de maturation et équipé d'au moins une installation selon l'une quelconque des revendications 1 à 8.
